# EUROPÄISCHE PATENTSCHRIFT

(11) **EP 2 217 463 B1**
(45) Veröffentlichungstag und Bekanntmachung des Hinweises auf die Patenterteilung: **02.04.2014**
(21) Anmeldenummer: 08846598.4
(22) Anmeldetag: 10.11.2008
(51) Int. Cl.: B60K 35/00

(54) **FAHRZEUGANZEIGESYSTEM MIT EINEM OPTISCHEN SYSTEM, MIT EINER ERSTEN ANZEIGEEINRICHTUNG UND MIT EINER ZWEITEN ANZEIGEEINRICHTUNG**
VEHICLE INDICATION SYSTEM HAVING AN OPTICAL SYSTEM, HAVING A FIRST INDICATION DEVICE AND HAVING A SECOND INDICATION DEVICE
SYSTÈME D'AFFICHAGE POUR VÉHICULE COMPRENANT UN SYSTÈME OPTIQUE, UN PREMIER DISPOSITIF D'AFFICHAGE ET UN SECOND DISPOSITIF D'AFFICHAGE

(30) Priorität: 08.11.2007 DE 102007053624
(43) Veröffentlichungstag der Anmeldung: 18.08.2010
(73) Patentinhaber: Johnson Controls GmbH, 51399 Burscheid (DE)
(72) Erfinder: LACKMANN, Kay, 45149 Essen (DE); SCHLIEP, FRANK, 51375 Leverkusen (DE)
(74) Vertreter: Schwöbel, Thilo K.
(86) Internationale Anmeldenummer: PCT/EP2008/009478
(87) Internationale Veröffentlichungsnummer: WO 2009/059799

(56) Entgegenhaltungen:
- EP-A- 1 052 133
- WO-A-2005/098513
- DE-A1- 4 323 082
- US-A1- 2002 154 349

## Beschreibung

Die vorliegende Erfindung betrifft ein optisches Element, welches zwischen mindestens zwei Zuständen umschaltbar ausgeführt ist, wobei das optische Element in einem ersten Zustand vorwiegend transmittierend ausgestaltet ist und in einem zweiten Zustand vorwiegend reflektierend ausgestaltet ist. Eine bevorzugte Verwendung eines solchen optischen Elements bzw. einer solchen Weiche besteht in ihrer Nutzung als Bestandteil eines hybriden Kraftfahrzeuganzeigeinstruments, welches zwischen zwei optischen Pfaden umschaltbar ist, wobei das Kraftfahrzeuganzeigeinstrument bzw. Fahrzeuganzeigesystem ein optisches System, eine erste Anzeigeeinrichtung und eine zweite Anzeigeeinrichtung aufweist.

Ein gattungsgleiches Fahrzeuganzeigesystem ist aus der deutschen Patentanmeldung DE 10 2007 014 581 A1 bekannt.

Des weiteren offenbart DE 4323082 A ein Fahrzeuganzeigesystem gemäß dem Oberbegriff des Anspruchs 1.

Aufgabe der vorliegenden Erfindung ist es, ein Fahrzeuganzeigesystem zu schaffen, bei dem ein einfacher und betriebssicherer sowie zuverlässiger Aufbau des Fahrzeuganzeigesystems mit einer großen Variabilität an Anzeigemölichkeiten kombiniert werden kann, das einfach und dennoch stabil und insbesondere mit Blick auf einen Betrieb des Fahrzeuganzeigesystems während einer Betriebsdauer von vielen Jahren robust ausgelegt ist, und bei dem mit einfachen Mitteln eine aktive Umschaltung zwischen den beiden Anzeigeeinrichtungen möglich ist, und das kostengünstig herstellbar ist und eine hohe Stabilität aufweist.

Die Aufgabe wird gelöst durch ein Fahrzeuganzeigesystem gemäß Anspruch 1.

Es ist erfindungsgemäß besonders bevorzugt, dass das optische System im Wesentlichen plan oder planar aufgebaut ist.

Hierdurch wird in besonders vorteilhafter Weise gemäß der vorliegenden Erfindung ein besonders einfacher und - insbesondere hinsichtlich einer vergleichsweise langen Betriebsdauer - stabiler Aufbau des Fahrzeuganzeigesystems möglich.

Weiterhin ist es erfindungsgemäß bevorzugt, dass die erste Anzeigeeinrichtung als eine analoge Anzeigeeinrichtung vorgesehen ist und dass die zweite Anzeigeeinrichtung als eine Digitalanzeigeeinrichtung vorgesehen ist.

Hierdurch ist es erfindungsgemäß vorteilhaft möglich, eine Vielzahl von unterschiedlichen Informationen in besonders platzsparender Weise für einen Benutzer darzustellen. Weiterhin wird hierdurch auch die Betriebssicherheit eines mit dem erfindungsgemäßen Fahrzeuganzeigesystem ausgestatteten Fahrzeugs dadurch erhöht, dass der Fahrer zur Anzeige einer bestimmten Information die Blickrichtung nicht oder zumindest weniger stark von der zur Beobachtung des Verkehrsgeschehens vorgesehenen Blickrichtung abwenden muss.

Die Erfindung wird nachfolgend anhand von in der Zeichnung dargestellten Ausführungsbeispielen näher erläutert.
Figur 1 zeigt eine schematische Schnittdarstellung eines erfindungsgemäßen Fahrzeuganzeigesystems.
Figur 2 zeigt eine schematische Schnittdarstellung eines optischen Elements bzw. optischen Systems eines Fahrzeuganzeigesystems gemäß der vorliegenden Erfindung.

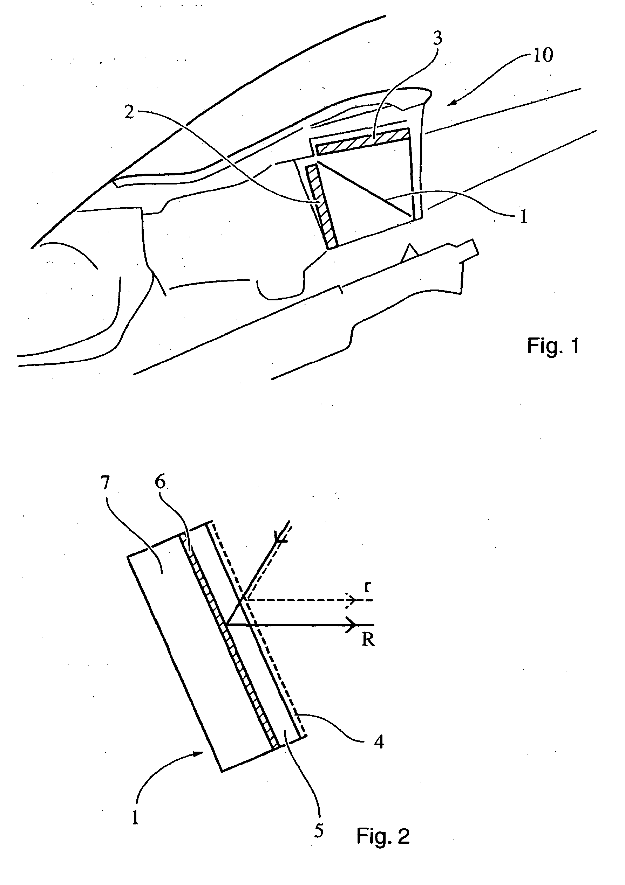

In den Figuren 1 und 2 ist ein Ausführungsbeispiel eines erfindungsgemäßen Fahrzeuganzeigesystems 10 bzw. eines optischen Elements bzw. optischen Systems des erfindungsgemäßen Fahrzeuganzeigesystems 10 dargestellt.

Hierbei geht insbesondere aus Figur 1 hervor, dass das Fahrzeuganzeigesystem 10 eine erste Anzeigeeinrichtung 2 und eine zweite Anzeigeeinrichtung 3 aufweist. Hierbei ist insbesondere vorgesehen, dass die erste Anzeigeeinrichtung 2 beispielsweise eine analoge Anzeigemöglichkeit, insbesondere einen analogen - insbesondere mechanisch drehbaren - Zeiger aufweist und dass die zweite Anzeigeeinrichtung 3 beispielsweise eine digitale Anzeigemöglichkeit - etwa in Form eines Matrixanzeigeelementes - beispielsweise in Form eines Flüssigkristallanzeigeelementes oder auch eines OLED-Anzeigeelements (organic light emitting diode display) oder der gleichen aufweist. Es kann erfindungsgemäß jedoch auch vorgesehen sein, dass auch die erste Anzeigeeinrichtung 2 - zumindest in einem Teilbereich - eine Digitalanzeige aufweist und/oder dass die zweite Anzeigeeinrichtung 3 - zumindest in einem Teilbereich - ein analoges Anzeigeelement aufweist.

Erfindungsgemäß weist das Fahrzeuganzeigesystem 10 ferner ein optisches System 1 auf, welches im in den Figuren dargestellten Ausführungsbeispiel im wesentlichen als ein aktiv ansteuerbarer und in wenigstens einem Betriebsmodus als halbdurchlässiger oder ganzdurchlässiger Spiegel ausgebildet ist. Das optische System 1 ist in der Figur 2 in einer Detaildarstellung schematisch dargestellt. Im Folgenden wird das optische System 1 auch als optische Weiche 1 bzw. als Weiche 1 bezeichnet. Ferner werden im Folgenden die erste Anzeigeeinrichtung 2 und die zweite Anzeigeeinrichtung 3 auch als Bildgeber 2, 3 bzw. als Bildquellen 2, 3 bezeichnet.

Gemäß dem Ausführungsbeispiel nach Figur 1 ist die Weiche 1 ungefähr winkelhalbierend zwischen dem durch zwei Bildgeber 2, 3 aufgespannten Winkel angeordnet. Der Zustand des optischen Elements 1 bzw. optischen Systems 1 beeinflusst somit, welche der Bildquellen 2, 3 (bzw. welches der ersten Anzeigeeinrichtung 2 bzw. der zweiten Anzeigeeinrichtung 3) der (in der Zeichnung nicht dargestellte, jedoch auf der rechten Seite zu denkende) Nutzer überwiegend oder ausschließlich wahrnimmt.

Erfindungsgemäß ist es bevorzugt vorgesehen, dass die (nachfolgend auch als zweiter Bereich 4 des optischen Systems 1 bezeichnete) Oberfläche des optischen Elements mit einer Anti-Reflex-Schicht 4 ausgestattet ist. Damit wird eine störende Reflexion an der dem Betrachter zugewandten, ersten Oberfläche einer Schicht 5, die aus Glas besteht, weitgehend unterbunden.

Es findet zudem eine erwünschte Reflexion statt an der Grenzfläche zwischen der Schicht 5 und einer angrenzenden, transmissionsvariablen (und nachfolgend auch als erster Bereich 6 des optischen Systems 1 bezeichneten) Schicht 6. Für den Fall, dass diese Schicht 6 in einen transmissionsarmen Zustand gebracht wird - eine derartige, steuerbare Verdunkelung kann etwa durch eine elektrochrome Schicht bewirkt werden - ist die Sichtbarkeit des Bildgebers 2 (bzw. der ersten Anzeigeeinrichtung 2) für den Nutzer verringert bzw. unterbunden und eine durch Reflexion herbeigeführte Sichtbarkeit des Bildgebers 3 (bzw. der zweiten Anzeigeeinrichtung 3) ist gegeben. Dieser Zustand geht daher mit einem erhöhten Lichtreflexionskoeffizient im ersten Bereich 6 des optischen Systems 1 und mit einem reduzierten Lichttransmissionskoeffizienten einher. In einem anderen Schaltungszustand des ersten Bereichs 6 des optischen Systems 1 kann es umgekehrt vorgesehen sein, dass ein reduzierter Lichtreflexionskoeffizient im ersten Bereich 6 des optischen Systems 1 mit einem erhöhten Lichttransmissionskoeffizienten einhergeht, so dass die Sichtbarkeit des Bildgebers 3 (bzw. der zweiten Anzeigeeinrichtung 3) für den Nutzer verringert bzw. unterbunden und eine durch Transmission herbeigeführte Sichtbarkeit des Bildgebers 2 (bzw. der ersten Anzeigeeinrichtung 2) gegeben ist.

Generell gilt, dass die Intensität, mit der die Bildgeber 2, 3 ihre Bilder zur Wahrnehmung durch den Nutzer erzeugen, durch die Beleuchtungsstärke ihnen zugeordneter (jedoch in der Zeichnung nicht dargestellter) Lichtquellen beeinflussbar sein kann; dadurch ist auch ein aus beiden optischen Pfaden kombiniertes Mischbild erzeugbar.

An die transmissionsvariable Schicht 6 schließt sich eine weitere Schicht 7 an, die hauptsächlich als Träger dient und die mechanische Stabilität der Weiche 1 bzw. des optischen Systems 1 sicherstellt; dabei handelt es sich um eine Glasplatte.

Durch den geschilderten Aufbau des optischen Elements 1 bzw. des optischen Systems 1 ist somit eine Vorrichtung angegeben, die im Wesentlichen an einer Ebene reflektiert (siehe die durchgezogene Linie R); erfindungsgemäß wird so der Entstehung sogenannter Geisterbilder, wie sie bei Doppelreflexion auftreten (in der Figur gestichelt dargestellt und mit r bezeichnet) entgegenwirkt.

Die Anti-Reflexionsschicht 4 ist insbesondere in Form eines mehrschichtigen Aufbaus aus Materialien mit unterschiedlichem Brechungsindex vorgesehen, so dass Licht in einem für die Benutzung des Fahrzeuganzeigesystems hauptsächlich relevanten Wellenlängenbereich gerade nicht in einem anderen Bereich reflektiert wird als im ersten Bereich 6 des optischen Systems 1.

Das optische System 1 ist erfindungsgemäß insbesondere im Wesentlichen plan bzw. planar aufgebaut, so dass eine verhältnismäßig einfache sowie kostengünstige Herstellung möglich ist. Alternativ zu einem solchen Aufbau ist es erfindungsgemäß jedoch auch möglich, dass das optische System 1 zumindest eine gekrümmte Oberfläche aufweist oder aber eine gekrümmte (interne) Fläche aufweist, so dass beispielsweise eine abbildende Eigenschaft des optischen Systems realisierbar ist.

### Bezugszeichenliste

- 1: optisches System / optisches Element / Weiche
- 2: erste Anzeigeeinrichtung
- 3: zweite Anzeigeeinrichtung
- 4: zweiter Bereich des optischen Systems / Anti-Reflex-Schicht
- 5: Schicht
- 6: erster Bereich des optischen Systems / transmissionsvariable Schicht
- 7: weitere Schicht
- 10: Fahrzeuganzeigesystem
- R: Reflexion an der transmissionsvariablen Schicht
- r: Reflexion an der dem Benutzer zugewandten Oberfläche der Schicht 5

## Patentansprüche

1. Fahrzeuganzeigesystem (10) mit einem optischen System (1), mit einer ersten Anzeigeeinrichtung (2) und mit einer zweiten Anzeigeeinrichtung (3), wobei das optische System (1) zur Anzeige von durch die erste Anzeigeeinrichtung (2) bereitgestellten Informationen wenigstens teilweise transparent oder transluzent vorgesehen ist, dass das optische System (1) zur Anzeige von durch die zweite Anzeigeeinrichtung (3) bereitgestellten Informationen wenigstens teilweise reflektierend vorgesehen ist, wobei das optische System (1) einen ersten Bereich (6) aufweist, dessen Lichttransmissions- und Lichtreflexionskoeffizient änderbar ist, und wobei das optische System (1) einen zweiten Bereich (4) aufweist, wobei das optische System (1) im ersten Bereich (6) einen elektrochromen Bereich aufweist, wobei das optische System (1) den elektrochromen ersten Bereich (6) zwischen einer weiteren Schicht (7) als Trägerschicht und einer Schicht (5) aus jeweils einem Glasmaterial aufweist, **dadurch gekennzeichnet, dass** der Lichtreflexionskoeffizient des zweiten Bereichs (4) mittels einer Antireflexionsschicht verringert vorgesehen ist, wobei die weitere Schicht (7) eine Glasplatte ist und wobei die Schicht (5) zwischen dem ersten Bereich (6) und dem zweiten Bereich (4) angeordnet ist und ein transparentes Element als ein Glaselement aufweist.

2. Fahrzeuganzeigesystem (10) nach Anspruch 1, **dadurch gekennzeichnet, dass** das optische System (1) im Wesentlichen plan oder planar aufgebaut ist.

3. Fahrzeuganzeigesystem (10) nach einem der vorhergehenden Ansprüche, **dadurch gekennzeichnet, dass** die erste Anzeigeeinrichtung (2) als eine analoge Anzeigeeinrichtung vorgesehen ist und dass die zweite Anzeigeeinrichtung (3) als eine Digitalanzeigeeinrichtung vorgesehen ist.

## Claims

1. Vehicle display system (10) having an optical system (1), having a first display device (2) and having a second display device (3), the optical system (1) being provided in an at least partially transparent or translucent fashion for the purpose of displaying information provided by the first display device (2), in that the optical system (1) is provided at least partially in a reflecting fashion for the purpose of displaying information provided by the second display device (3), the optical system (1) having a first region (6) whose light transmission and light reflection coefficient is changeable, and the optical system (1) having a second region (4) the optical system (1) having an electrochromic region in the first region (6), the optical system (1) having the electrochromic first region (6) between a further layer (7), as support layer, and a layer (5) made respectively from a glass material, **characterized in that** the light reflection coefficient of the second region (4) is provided in a fashion reduced by means of an antireflection layer, the further layer (7) being a glass plate and the layer (5) being arranged between the first region (6) and the second region (4) and having a transparent element as a glass element.

2. Vehicle display system (10) according to Claim 1, **characterized in that** the optical system (1) is of substantially flat or planar design.

3. Vehicle display system (10) according to one of the preceding claims, **characterized in that** the first display device (2) is provided as an analog display device, and **in that** the second display device (3) is provided as a digital display device.

## Revendications

1. Système d'affichage pour véhicule (10) comprenant un système optique (1), un premier dispositif d'affichage (2) et un deuxième dispositif d'affichage (3), le système optique (1) étant prévu pour afficher de manière au moins partiellement transparente ou translucide des informations fournies par le premier dispositif d'affichage (2), le système optique (1) étant prévu pour afficher de manière au moins partiellement réfléchissante des informations fournies par le deuxième dispositif d'affichage (3), le système optique (1) présentant une première région (6) dont le coefficient de transmission de la lumière et de réflexion de la lumière peut être modifié, et le système optique (1) présentant une deuxième région (4), le système optique (1) présentant, dans la première région (6), une région électrochromique, le système optique (1) présentant la première région électrochromique (6) entre une couche (7) supplémentaire servant de couche porteuse et une couche (5) en matériau en verre, **caractérisé en ce que** le coefficient de réflexion de la lumière de la deuxième région (4) est prévu de manière à être abaissé au moyen d'une couche antiréfléchissante, la couche (7) supplémentaire étant une plaque de verre et la couche (5) étant disposée entre la première région (6) et la deuxième région (4) et présentant un élément transparent en tant qu'élément de verre.

2. Système d'affichage pour véhicule (10) selon la revendication 1, **caractérisé en ce que** le système optique (1) est construit de manière essentiellement plane ou plate.

3. Système d'affichage pour véhicule (10) selon l'une quelconque des revendications précédentes, **caractérisé en ce que** le premier dispositif d'affichage (2) est prévu sous forme de dispositif d'affichage analogique et **en ce que** le deuxième dispositif d'affichage (3) est prévu sous forme de dispositif d'affichage numérique.
